Europäisches Patentamt

European Patent Office

Office européen des brevets

(11) Veröffentlichungsnummer : **0 007 653**
B1

# (12) EUROPÄISCHE PATENTSCHRIFT

(45) Veröffentlichungstag der Patentschrift :
13.01.82

(51) Int. Cl.³ : **G 01 F 11/28, C 02 F 1/76**

(21) Anmeldenummer : **79200328.7**

(22) Anmeldetag : **21.06.79**

(54) Vorrichtung zum Dosieren und/oder Verteilen von flüssigen Medien.

(30) Priorität : **28.07.78 DE 2833155**

(43) Veröffentlichungstag der Anmeldung :
**06.02.80 (Patentblatt 80/03)**

(45) Bekanntmachung des Hinweises auf die Patenterteilung : **13.01.82 Patentblatt 82/02**

(84) Benannte Vertragsstaaten :
**AT BE CH DE FR GB IT LU NL SE**

(56) Entgegenhaltungen :
**DE - C - 545 728**
**DE - C - 723 114**
**GB - A - 339 061**
**US - A - 2 523 634**
**US - A - 3 758 276**

(73) Patentinhaber : **METALLGESELLSCHAFT AG**
**Reuterweg 14 Postfach 3724**
**D-6000 Frankfurt/M.1 (DE)**

(72) Erfinder : **Pfohl, Rainer, Dipl.-Ing.**
**Kettelerstrasse 15**
**D-6056 Heusenstamm (DE)**
Erfinder : **Gritschke, Martin, Ing. grad.**
**Am Strassberg 10**
**D-6367 Karben 3 (DE)**
Erfinder : **Schubert, Jürgen, Dipl.-Ing.**
**Fasanenstrasse 16**
**D-6381 Bad Homburg (DE)**

(74) Vertreter : **Fischer, Ernst, Dr.**
**Reuterweg 14**
**D-6000 Frankfurt am Main 1 (DE)**

EP 0 007 653 B1

Imprimerie Jouve, 18, rue St-Denis, 75001 Paris, France

Vorrichtung zum Dosieren und/oder Verteilen von flüssigen Medien

Die Erfindung betrifft eine Vorrichtung zum Dosieren und/oder Verteilen von flüssigen Medien in andere flüssige Medien mit einem praktisch horizontalen Verteilerrohr und einer Vielzahl von vom Verteilerrohr abwärts abgehenden Zuführorganen sowie die Anwendung der Vorrichtung zum Eintrag von Flüssigkeiten mit Aktivchlorgehalten in zeitlich variierenden Mengen in Kühlwasserströme.

Bei einer Vielzahl von Verfahren ist es erforderlich, eine Beaufschlagung mit flüssigen Medien vorzunehmen. Hierbei kann es sich beispielsweise um die möglichst gleichmäßige Aufgabe von flüssigen Medien, wie Schwefelsäure zur Trocknung von Gasen, auf die Oberfläche eines mit Füllkörpern ausgesetzten und von unten nach oben vom Gas durchströmten Turmes oder um die Durchführung von Reaktionen zwischen Gasen und flüssigen Medien, wie die Herstellung von Hypochlorit aus Chlorgas und Natronlauge, nach dem für die Gastrocknung beschriebenen Schema handeln. Andere Beispiele, bei denen Vorrichtungen zum Dosieren von flüssigen Medien erforderlich sind, sind die zahlreichen Verfahren zur Wasserbehandlung, bei denen es erforderlich ist, gelöste Chemikalien zuzusetzen, die beispielsweise dazu dienen, Verunreinigungen zu fällen oder auszuflocken oder Wasser zu desinfizieren.

Bei den vorgenannten Verfahren kommt es wesentlich darauf an, eine punktuelle Zuführung, die eine anschließende, beispielsweise mechanische, Vermischung erfordert, zu vermeiden und statt dessen bereits beim Eintrag des flüssigen Mediums eine möglichst gute Verteilung zu erzielen. Sofern beispielsweise die Wasserbehandlung in einem besonderen Behälter erfolgt, ist eine gleichmäßige Verteilung der Chemikalien vergleichsweise einfach zu erzielen, indem beispielsweise speziell angeordnete Zuflußstutzen und Zwischenböden vorgesehen werden und durch radiale Trennwände eine Mehrzahl von Einzelkammern erzeugt wird, in die die Abflußleitungen für die Chemikalien münden (DE-AS 18 16 526).

Ähnliches gilt im Verhältnis zum Rohrverteiler gemäß DE-OS 26 10 387, bei dem Medien unter Druck in eine zu behandelnde Flüssigkeit eingesprüht werden, in den über die Einsprühöffnungen elastische Schläuche mit Eigenspannung geschoben sind, die vom statischen Druck des Abwassers auf die Öffnungen im Sinne des Verschließens gedrückt und vom eingesprühten Medium zur Erzielung eines Durchlasses gelüftet werden.

Aus DE-PS 545 728 ist eine Vorrichtung bekannt, welche zur Regelung der Menge einer Flüssigkeit verwendbar ist und bei welcher ein Dosierrohr vorgesehen ist, das flüssigkeitsdicht in einen Behälter eingepaßt, oben und unten offen ist und mehrere seitliche Öffnungen aufweist. Die vorbekannte Vorrichtung sieht weder eine Vielzahl von Dosierrohren, noch ein horizontales Verteilerrohr vor. Eine Verteilung von flüssigen Medien über eine größere Fläche ist mithin nicht möglich.

Schwierigkeiten ergeben sich, wenn das flüssige Medium in andere strömende Medien — wie vorstehend beispielsweise aufgeführt — einzutragen ist. Sie verstärken sich dann, wenn zudem die Menge des zu dosierenden Mediums in zeitlichen Abständen variieren soll. Dieses Problem stellt sich beispielsweise, wenn bei Trocknungsprozessen der Feuchtigkeitsgehalt der zu trocknenden Gase oder bei chemischen Prozessen der Gehalt des Gases am gasförmigen Reaktanten schwankt. Eine besondere Situation herrscht bei der Behandlung von strömenden Wässern, wie bei der Chlorung von Kühlwasserströmen mit z.B. Hypochloritlösung, wenn neben der sogenannten Dauerchlorung eine sogenannte Schockchlorung vorgenommen werden soll. Hierbei ist die zu dosierende Chlormenge bei Verwendung des gleichen Chlorungsmittels kurzfristig beispielsweise auf das 2- bis 10-fache zu steigern, d.h. es ist die zuzudosierende Flüssigkeitsmenge im gleichen Verhältnis zu erhöhen.

Aufgabe der Erfindung ist, eine Vorrichtung bereitzustellen. Die konstruktiv einfach ist, eine hohe Präzision hinsichtlich Dosierung und/oder Verteilung des flüssigen Mediums gewährleistet und die Veränderung der Zugabemengen in zeitlichen Abständen gestattet.

Die Aufgabe wird gelöst, indem die eingangs genannte Vorrichtung entsprechend der Erfindung derart ausgestaltet wird, daß die Zuführorgane als im Verteilerrohr flüssigkeitsdicht eingepaßte, unten aus dem Verteilerrohr herausführende und oben im oberen Bereich des Verteilerrohres endende, beidseitig offene Dosierrohre ausgebildet sind, die oberhalb der Einpassung in das Verteilerrohr mit mindestens einer seitlichen Öffnung versehen sind und wobei über die unteren Enden der Dosierrohre Schläuche unterschiedlicher Länge gezogen sind, deren Austrittsöffnungen im wesentlichen gleichmäßig über den Strömungsquerschnitt des anderen flüssigen Mediums verteilt sind.

Besitzt das Dosierrohr eine seitliche Öffnung, ist eine Dosierung mit zwei verschiedenen Mengen des flüssigen Mediums möglich, indem eine ständig in die seitliche Öffnung eintretende Flüssigkeitsmenge das Dosierrohr verläßt, der in bestimmten beliebigen zeitlichen Intervallen eine weitere Flüssigkeitsmenge, die in die obere Öffnung des im oberen Bereich des Verteilerrohres endenden Dosierrohres eintritt, überlagert werden kann. Hierzu ist lediglich die Einstellung eines bestimmten, einmal nur knapp oberhalb der seitlichen Öffnung, andermal über der oben gelegenen Öffnung der Dosierrohre liegenden Flüssigkeitsniveaus erforderlich, was bei Zuführung entsprechender Flüssigkeitsmengen in das Verteilerrohr automatisch geschieht.

Sind im Dosierrohr mehrere übereinanderliegende seitliche Öffnungen angebracht, sind weitere abgestufte Flüssigkeitsmengen dosier- und verteilbar, die sich wiederum durch unterschiedliche Niveaueinstellungen im Verteilerrohr ergeben.

Eine weitere Steigerung der zu dosierenden und verteilenden Flüssigkeitsmenge läßt sich dann erreichen, wenn das üblicherweise belüftete Verteilerrohr mit einem Rückschlagventil versehen wird, so daß neben dem für die Dosierung maßgeblichen hydrostatischen Druck noch der gegebenenfalls variierbare Pumpendruck ausgenutzt werden kann. Im Bereich der maximalen Durchflußmenge ist dann je nach Pumpendruck noch eine gewisse Variationsmöglichkeit für die dosierte Flüssigkeitsmenge gegeben.

Je nach Anwendungsfall wird eine Vorrichtung beispielsweise über einen Wasserkanal oder werden mehrere Vorrichtungen gleichmäßig über den Querschnitt eines Rieselturmes verteilt.

Bei Rieseltürmen ist dann eine unmittelbare Steuerung des Mengenreglers und damit der zu verteilenden Flüssigkeitsmenge über einen zum Beispiel den Feuchtigkeitsgehalt eines Gases (bei Trocknungsprozessen) oder den Gehalt an gasförmigen Reaktanten (bei chemischen Prozessen) erfassenden Detektor möglich. Selbstverständlich kann die Steuerung auch über die Beschaffenheit des den Rieselturm verlassenden Mediums, bei der Gastrocknung mit Schwefelsäure z.B. über deren Wassergehalt, betrieben werden.

Bei der Behandlung strömender Wässer mittels der erfindungsgemäßen Vorrichtung mit z.B. Lösungen mit Aktivchlorgehalten, wie Hypochlorit-Lösung, wie auch bei der Verteilung von Chemikalien in tiefen Gewässern wird durch die Verwendung von Schläuchen unterschiedlicher Länge eine besonders gute Verteilung der Chemikalien erzielt, die durch die hin- und hergehende Pendelbewegung der Schläuche noch intensiviert wird. Im letztgenannten Anwendungsfall ist bei Zudosierung in offene Kanäle weiterhin vorteilhaft, an den Schläuchen in unterschiedlicher Höhe Schwimmkörper anzuordnen. Hierdurch ist gewährleistet, daß bei sich ändernden Flüssigkeitsniveaus die Austrittsöffnungen der Schläuche angehoben bzw. abgesenkt werden und sich dem neu geschaffenen Strömungsquerschnitt anpassen. Je nach Einsatzgebiet sind Verteilerrohr, Dosierrohre und Schläuche aus entsprechend chemikalienresistenten Werkstoffen, wie z.B. Teflon, Polypropylen oder Polyvinylchlorid, herzustellen bzw. damit zu beschichten.

Obgleich die Vorrichtung eine Vielzahl von Einsatzmöglichkeiten — wie die einleitend genannten Fälle — besitzt, liegt der bevorzugte Anwendungsfall im Eintrag von Flüssigkeiten mit Aktivchlorgehalten in zeitlich variierenden Mengen in Kühlwasserströme. Aufgrund der Schnelligkeit und des hohen Grades der Verteilung können dann die zum Schutz von Pumpen, Kühlern etc. erforderlichen Grob- und Feinrechen sowie Siebe zur Entfernung von Treibgut strömungsseitig hinter der Vorrichtung angebracht werden. Im Unterschied zur Anbringung vor der Eintragsvorrichtung, also im ungechlorten Wasser, wird damit vermieden, daß die genannten Schutzvorrichtungen von Bewuchs durch Lebewesen, wie z.B. Muscheln etc., befallen werden. Wegen der zuvor erzielten tuten Verteilung des Aktivchlors auf den Flüssigkeitsstrom können zudem die Schutzvorrichtungen aus herkömmlichen Stählen gefertigt werden. Der Einsatz des für übliche Dosiereinrichtungen wegen der benötigten Festigkeit erforderlichen unkostenmäßig aufwendigen Titans als Werkstoff kann vermieden werden.

Die Erfindung wird anhand der Figuren beispielsweise und näher erläutert.

Es veranschaulichen

Fig. 1 einen Schnitt durch ein Dosierrohr der Vorrichtung,

Fig. 2 einen Schnitt durch die Vorrichtung mit einer Vielzahl von Dosierrohren,

Fig. 3 eine schematische Darstellung der Vorrichtung mit an den unteren Dosierrohrenden angebrachten Schläuchen unterschiedlicher Länge.

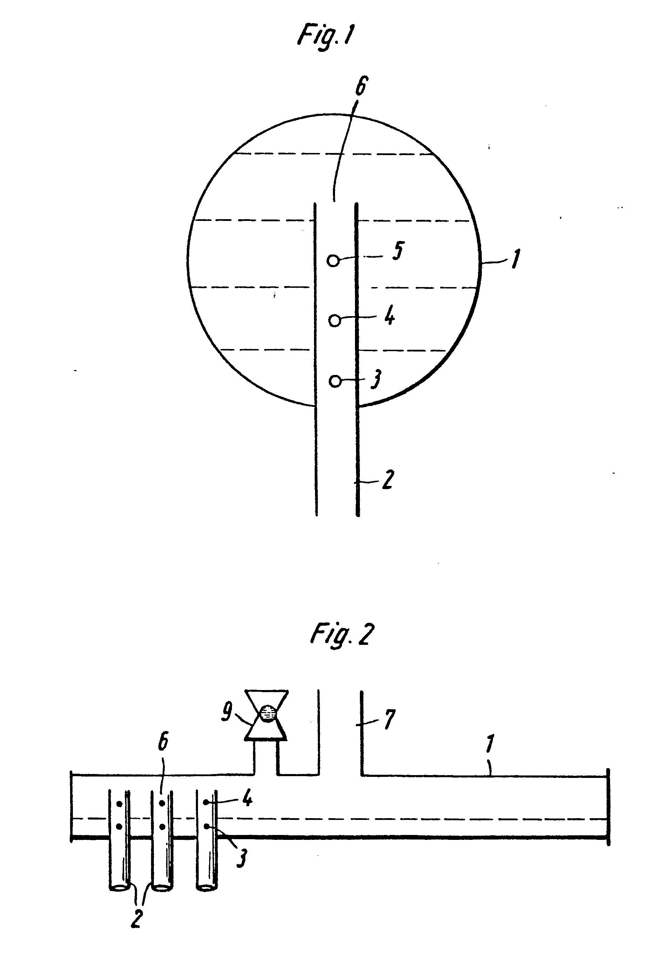

In Fig. 1 besitzt das Verteilerrohr 1 ein darin eingepaßtes Dosierrohr 2 mit drei seitlichen Öffnungen 3, 4 und 5 sowie einer oberen Eintrittsöffnung 6. Durch eine Niveauveränderung entsprechend den unterbrochenen Linien tritt das zu dosierende und verteilende flüssige Medium nur durch die untere seitliche Öffnung 3, durch die beiden unteren seitlichen Öffnungen 3 und 4, durch alle drei seitlichen Öffnungen 3, 4 und 5 oder durch alle Öffnungen 3, 4, 5 und 6 in das Dosierrohr 2 ein.

In der Darstellung der Vorrichtung gemäß Fig. 2 sind das Verteilerrohr 1 und drei Dosierrohre mit zwei seitlichen Öffnungen 3 und 4 ausgeführt. Die Zufuhr des flüssigen Mediums erfolgt über eine Leitung 7. Mit 9 ist ein Rückschlagventil bezeichnet, mit dessen Hilfe zur Dosierung zusätzlich der Pumpendruck ausgenutzt werden kann.

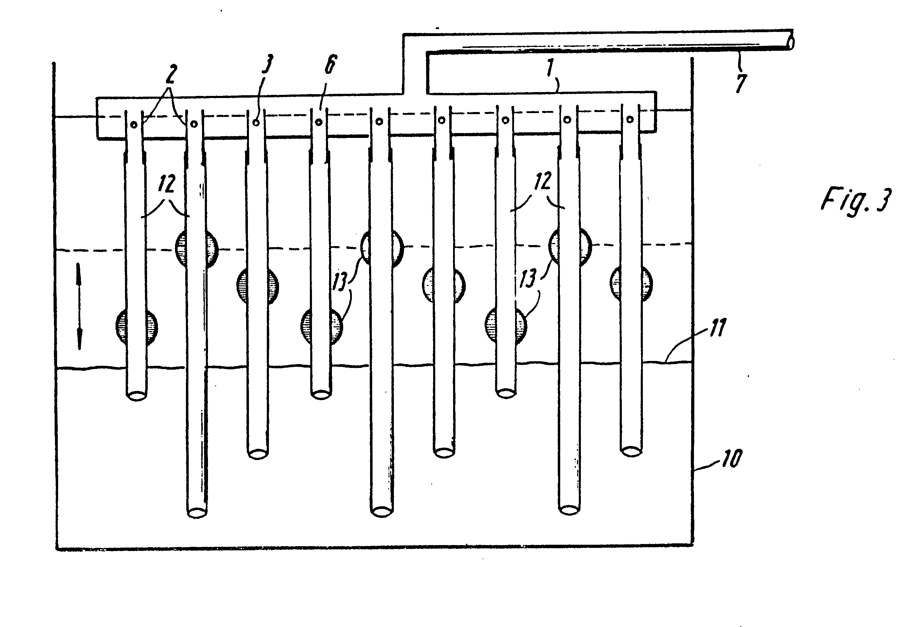

Die Figur 3 zeigt die Dosierung eines flüssigen Mediums am Beispiel der Chlorung von Kühlwasser mit Hilfe von Hypochlorit-Lösung. Ein Kraftwerk wird über einen betonierten offenen Kanal 10 mit Kühlwasser versorgt. Das Wasserniveau ist mit 11 bezeichnet und kann maximal bis zur punktierten Markierung ansteigen, das über Leitung 7 mit Hypochlorit-Lösung, beispielsweise einer Konzentration von 2 g/l (berechnet als Aktivchlor), versorgt wird. Am Verteilerrohr 1 befinden sich schematisch dargestellte Dosierrohre 2, über die Schläuche 12 unterschiedlicher Länge gezogen sind, so daß die Austrittsöffnungen gleichmäßig über den Querschnitt der Wasserströmung verteilt sind. An den Schläuchen 12 befinden sich Schwimmkörper 13, die bei Anstieg der Wasserhöhe unterschiedlich schnell wirksam werden und bewirken, daß die Austrittsöffnungen angehoben werden und somit eine praktisch gleichmäßige Verteilung der Austrittsöffnungen über den Strömungsquerschnitt erhalten bleibt.

In zeitlichen Abständen wird die Menge der Hypochloritlösung vergrößert (zur Schockchlorung), so daß das Niveau im Verteilerrohr 1 über die Eintrittsöffnung 6 der Dosierrohre 2 angehoben wird. Hierdurch erfolgt die Verteilung der größeren Menge Hypochloritlösung auf die Schläuche 12 mit ähnlicher Güte wie die Verteilung der kleineren Menge (bei der Dauerchlorung).

**Ansprüche**

1. Vorrichtung zum Dosieren und/oder Verteilen von flüssigen Medien in andere flüssige Medien mit einem praktisch horizontalen Verteilerrohr und einer Vielzahl von vom Verteilerrohr abwärts abgehenden Zuführorganen, dadurch gekennzeichnet, daß die Zuführorgane als im Verteilerrohr (1) flüssigkeitsdicht eingepaßte, unten aus dem Verteilerrohr (1) herausführende und oben im oberen Bereich des Verteilerrohres (1) endende, beidseitig offene Dosierrohre (2) ausgebildet sind, die oberhalb der Einpassung in das Verteilerrohr (1) mit mindestens einer seitlichen Öffnung (3) versehen sind und wobei über die unteren Enden der Dosierrohre (2) Schläuche (12) unterschiedlicher Länge gezogen sind, deren Austrittsöffnungen im wesentlichen gleichmäßig über den Strömungsquerschnitt des anderen flüssigen Mediums verteilt sind.

2. Vorrichtung nach Anspruch 1, dadurch gekennzeichnet, daß das Verteilerrohr (1) ein einen Pumpendruck aufbauendes Rückschlagventil (9) aufweist.

3. Anwendung der Vorrichtung gemäß Anspruch 1 oder 2 zum Eintrag von Flüssigkeiten mit Aktivchlorgehalt in zeitlich variierenden Mengen in Kühlwasserströme.

**Claims**

1. Apparatus for discharging and/or distributing liquid media in other liquid media, having a virtually horizontal manifold and a plurality of discharge conduits which depend from said manifold, characterized in that the discharge conduits comprise discharge tubes (2), which are open at both ends and are liquid-tightly fitted in and depend from the manifold (1), and each of said tubes has a top end disposed in the upper portion of the manifold (1) and at least one lateral opening (3) disposed above the joint between said tube and the manifold (1), and whereby hoses (12) of differing length are fitted on the lower ends of the discharge tubes (2) and have outlet openings which are substantially uniformly distributed over the cross-section of flow of the other liquid medium.

2. Apparatus according to claim 1, characterized in that the manifold (1) contains a check valve (9), which is adapted to cause a pump discharge pressure to be built up.

3. The use of apparatus according to claim 1 or 2 for discharging liquids which contain available chlorine at varying rates into streams of cooling water.

**Revendications**

1. Dispositif de dosage et/ou de répartititon de milieux liquides dans d'autres milieux liquides, comprenant un tuyau répartiteur sensiblement horizontal et un grand nombre d'organes d'amenée partant vers le bas depuis le tuyau répartiteur, caractérisé en ce que les organes d'amenée sont agencés en ajutages (2) de dosage ouverts aux deux extrémités, adaptés de manière étanche au liquide au tuyau (1) répartiteur, sortant par le bas du tuyau (1) répartiteur, se terminant vers le haut dans la région supérieure du tuyau (1) répartiteur et munis, au-dessus de l'endroit où ils s'adaptent au tuyau (1) répartiteur, d'au moins une ouverture (3) latérale, et sur les extrémités inférieures des ajutages (2) de dosage sont enfilés des tubes (12) souples de longueur différente, dont les ouvertures de sortie sont réparties d'une manière sensiblement uniforme sur la section droite d'écoulement de l'autre milieu fluide.

2. Dispositif suivant la revendication 1, caractérisé en ce que le tuyau (1) répartiteur présente un clapet (9) anti-retour constituant une pression de pompage.

3. Utilisation du dispositif suivant la revendication 1 ou 2 pour introduire des liquides à teneur en chlore actif en des quantités variables en fonction du temps dans des courants d'eau de refroidissement.

Fig. 1

Fig. 2

Fig. 3

0 007 653